Europäisches Patentamt

European Patent Office

Office européen des brevets

(19)

(11) **EP 1 081 632 A1**

(12) **EUROPEAN PATENT APPLICATION**

(43) Date of publication:
07.03.2001 Bulletin 2001/10

(51) Int Cl.⁷: **G06K 9/68**

(21) Application number: **99870178.3**

(22) Date of filing: **01.09.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Keyware Technologies**<br>**8900 Ieper (BE)** | (72) Inventor: **KEYWARE TECHNOLOGIES,**<br>**c/o Declercq Francis**<br>**B-1930 Zaventem (BE)**<br><br>(74) Representative: **Quintelier, Claude et al**<br>**Gevers & Vander Haeghen,**<br>**Patent Attorneys,**<br>**Rue de Livourne 7**<br>**1060 Brussels (BE)** |

(54) **Biometric authentication device**

(57)    A biometric authentication device provided for managing access to at least one entity, said device being connectable to a database storing biometric templates, said device comprising a set of bio-engines and a data capture unit provided to collect life biometric data, each of said bio-engines being provided for performing a dedicated biometric authentication operation with said biometric templates and said life biometric data and for generating a score as a result of said authentication operation, said device comprises a decision unit operating according to a master-slave relationship, wherein said decision unit being the master, said decision unit being provided for receiving each of said scores and for assigning a respective weight factor to each of said scores and forming a set of weighted scores therewith, said decision unit being further provided for combining said weighted scores and generating a verified score therewith, said decision unit being also provided for comparing said verified score with a threshold value and for generating an access enable signal as a result of a positive comparison and an access refusal signal as a result of a negative comparison.

## Description

The present invention relates to a biometric authentication device provided for managing access to at least one entity, said device being operatively connectable to a database provided for storing biometric templates, said device comprising a set of bio-engines each having an input for receiving said biometric templates and life biometric data originating from a data capture unit provided to collect life data, each of said bio-engines being provided for performing a dedicated biometric authentication operation with said biometric templates and said life biometric data and for generating a score as a result of said authentication operation.

Biometric authentication devices are known and their use is for example described in the article "Person authentication by fusing face and speech information" written by B. Duc, G. Maître, S. Fischer and J. Bigün and presented on the First International Conference AVBPA in Crans-Montana in March 1997 (p. 311-318). Biometrics is a science of measuring unique physical or behavioural characteristics such as the pattern of the voice of a person, or the micro-visual pattern of his retina, the tiny swirls etched in the skin of his fingertip, this facial appearance etc. Biometric authentication is used to manage access to an entity such as for example an office or a room, a bank account, a computer or a network, etc. The biometric data of one or more persons is stored in a database to which the bio-engines performing the biometric authentication have access. Data capture units such as for example a camera, a fingerprint scanner or a microphone collect the life biometric data from the person who want to get access to the entity protected by the biometric authentication device. The bio-engines perform than authentications and issue a score. If the score is above the predetermined threshold the person will get access to the entity. If the score is below the threshold access will be refused. The bio-engines are provided for a dedicated biometric authentication, i.e. there is a bio-engine for voice authentication, one for the fingerprint, another for the facial appearance etc. Each bio-engine generates its own score independent of the other engines.

Operating with a single bio-engine has a major drawback because the life biometric data of the person such as collected by the data capture unit can change. So for example a person having a cold will have his voice sound differently such that the bio-engine performing the voice authentication will issue a lower score which could lead to an access refusal. This could be solved by lowering the threshold. However lowering the threshold leads to an increase of false acceptance which for certain secure applications is unacceptable. Therefor attempts have been made to combine the outputs of several bio-engines such as described in the referred article.

A drawback of the known devices where the output of several biometric engines are combined is that they do not enable a true combination of the scores as each bio-engine continues to operate on its own by generating its own decision based on its internal score.

It is an object of the invention to realise a biometric authentication device enabling a true combination of the scores of the different bio-engines.

A biometric authentication device according to the present invention is therefor characterized in that said device comprises a decision unit connected to said bio-engines and operating according to a master-slave relationship, wherein said decision unit being the master, said decision unit being provided for receiving each of said scores and for assigning a respective weight factor to each of said scores and forming a set of weighted scores therewith, said decision unit being further provided for combining said weighted scores and generating a verified score therewith, said decision unit being also provided for comparing said verified score with a threshold value and for generating an access enable signal as a result of a positive comparison and an access refusal signal as a result of a negative comparison. The master-slave governing the relationship between the decision unit and the bio-engines enables such a true combination as the bio-engines scores are weighted by the decision unit. If one score is for example below the threshold whereas the others are above their respective thresholds, the decision unit can reduce the impact of such a bio-engine by assigning a low weight factor. As the decision unit has the scores of the different bio-engines a relative weighing of the different scores becomes possible. The decision to enable or not access to the entity is thus no longer based on a combination of the individual outputs of the different bio-engines, but on a combination of the scores realised by the decision unit.

A first preferred embodiment of a biometric authentication device according to the invention is characterized in that the decision unit is connected with a first bio-decision engine which is provided for executing a serial combinatorial operation with the scores generated by at least one of said bio-engines, said first bio-decision engine being provided to operate as a slave from said decision unit. This enables to have each individual bio-engine performing several authentication operations and to serially combine the scores issued by a same bio-engine.

A second preferred embodiment of a biometric authentication device according to the invention is characterized in that the decision unit is connected with a second bio-decision engine, which is provided for executing a parallel combinatorial operation with the scores generated by at least one of said bio-engines, said second bio-decision engine being provided to operate as a slave from said decision unit. This enables to have each individual bio-engine performing several authentication operations and to combine in parallel the scores issued by a same bio-engine.

A third preferred embodiment of a biometric authentication device according to the invention is characterised in that said decision unit is provided for generating a control signal when said verified score is below said threshold, said decision unit being further provided for determining a set of further weight factors under control of said control signal and assigning them to said scores and generating a further verified score therewith. This enables to reconsider the authentication operation if one of the scores was insufficient for example due to particular circumstances such a user having a bad voice quality due to a cold.

A fourth preferred embodiment of a biometric authentication device according to the invention is characterized in that said further weight factors and said weight factors each time satisfy a predetermined relationship. The weight factors are thus normalized which facilitates the calculation and keeps the verified score reliable.

Preferably said decision unit comprises a core server which is provided for generating said verified score and executing said comparison. This facilitates the architectural structure of the device.

Preferably characterized in that said decision unit comprises a module manager which is provided for managing data traffic between said bio-engines and said core server. An improved architecture for the data traffic is thus obtained.

Preferably said data capture unit is connected to an interface to which a feature module is connected, said feature module being provided for input of client dedicated features. The end user can in such a manner supply his own particular features to the device, such as for example those relating to a particular group of users or relating to particularities of individual users.

A fifth preferred embodiment of a biometric authentication device according to the invention is characterized in that said biometric templates are stored in a memory formed by either a smartcard, a harddisk, a EEPROM or a flash memory. In particular when a smartcard is used, the biometric templates of the owner are stored thereon and there is no need to let them travel over a publicly accessible network.

A sixth preferred embodiment of a biometric authentication device according to the invention is characterized is that said decision unit is connected to a self learning module which is provided for substituting into said database a biometric template by a life biometric data under control of a second control signal generated by said decision unit upon detection of a score issued by a bio-engine which is higher than a further predetermined threshold value. This enables to up-date the biometric templates and thus to improve the reliability of the access monitoring.

A seventh preferred embodiment of a biometric authentication device according to the invention is characterized in that said decision unit is connected to an environmental module which is provided for generating a trigger signal, said decision unit being provided to modify the weight factors under control of said trigger signal. This enables to take into account environmental conditions such as background noise or high or pour light intensity.

The invention will now be described in more details by means of the drawings showing a preferred embodiment of a device according to the invention. In the drawings :

Figure 1 illustrates the relation between a False Accept Rate and a False Reject Rate;
Figure 2 illustrates serial operating bio-engines;
Figure 3 illustrates parallel operating bio-engines;
Figure 4 illustrates a combination of parallel and serial operating bio-engines;
Figure 5 illustrates a set-up of different bio-engines according to the state of the art;
Figure 6 illustrates the principle of a threshold in a bio-engine;
Figure 7 illustrates schematically a set-up of a biometric authentication device according to the present invention;
Figure 8 illustrates the architecture of a biometric authentication device according to the present invention; and
Figure 9 illustrates schematically the operation of a biometric authentication device according to the present invention.

In the drawings a same reference sign has been assigned to a same or analogous element.

In biometrics a distinction is made between a "client", who should be recognised as somebody having access to the protected entity and an "impostor" who is someone pretending to be someone else and who should not have access. The protected entity can be a room, an office, a bank account, a computer system, a network etc.

The False Acceptance Rate (FAR) gives the percentage of falsely accepted impostors

$$FAR = \frac{\text{total number of falsely accepted impostors}}{\text{total number of impostors tested}}$$

The False Rejection Rate (FRR) gives the percentage of falsely rejected clients.

$$FRR = \frac{\text{total number of falsely rejected clients}}{\text{total number of clients tested}}$$

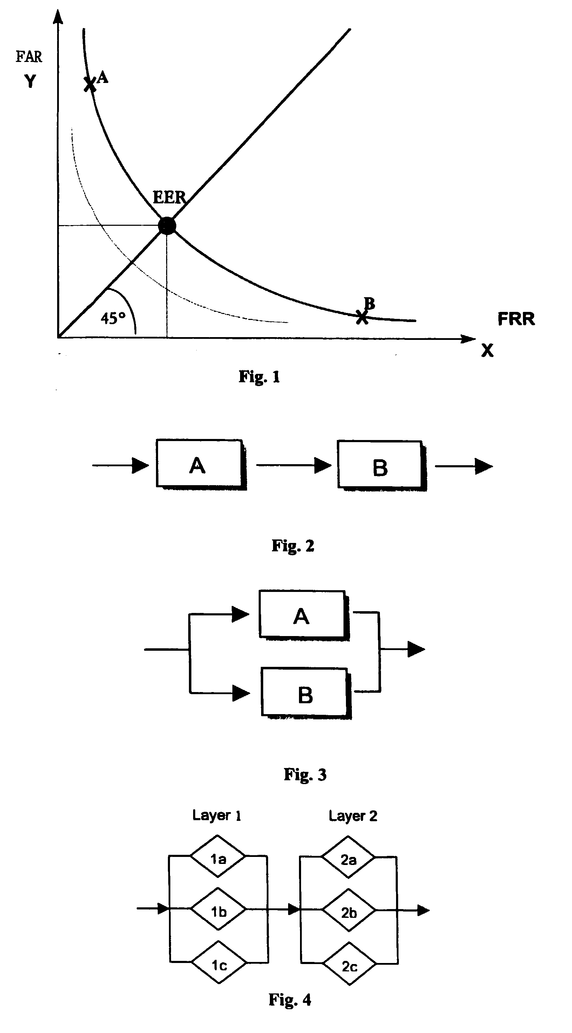

The Equal Error Rate (EER) is the percentage corresponding to the threshold level for which the FAR and FRR are equal. Figure 1 illustrates the relation between FAR and FRR. FAR and FRR are inversely proportional as illustrated. The technology tries to lower the EER which is the cross point between the FAR - FRR curve and the curve y = x. To lower the EER it is necessary to lower the values of FAR and FRR This can be obtained by increasing the number of biometric authentications.

Authentication signifies the general process of verifying the identity claimed by the user. Authentication thus covers as well a authentication process, which is a one to one process, as an identification process, which is a one to many process. Identification answers the question "Who is trying to get in ?, whereas authentication answers the question "Is that really Mr. Jones trying to get in ?" Biometric authentication is used as a general term for a process of checking ones identity by biometric technology.

A first possibility for increasing the number of biometric authentications is to serially combine the biometric authentication operations such as illustrated in figure 2. Suppose that two biometric authentication operations are performed, one by bio-engine A which performs a voice authentication and one by bio-engine B which performs face authentication. The serial combination starts with the first bio-engine generating a score Sva.

Due to the serial arrangement the second bio-engine B can only generate a score Svb if the first bio-engine has generated a positive score, i.e. if the first authentication was successful. The $FAR_S$ of the whole system is determined by :

$$FAR_S = FAR_A \times FAR_B$$

The $FRR_S$ of the system is determined by

$$FRR_S = FFR_A + (1 - FRR_A) \times FRR_B$$

By way of example suppose now

$$EER_A = 5 \% \text{ and } EER_B = 2 \%$$

Suppose also that both bio-engines will operate at a threshold where the EER is obtained. The threshold being the value of the score such as generated by the bio-engine at which a positive result i.e. access enabled, is generated. So $FAR_A = FRR_A = 5 \%$ and $FAR_B = FRR_B = 2\%$. The serial system will then have the following values :

$$FAR_S = 0.05 \times 0.02 = 0.001 \text{ or } 0.1 \%$$

$$FRR_S = 0.05 + (1- 0.05) \times 0.02 = 0.069 \text{ or } 6.9 \%$$

Thus the serial combination offers a better $FAR_S$ than each individual system but the $FRR_S$ has become worse. So with a serial combination it is harder to get falsely accepted because one has to pass two or more authentications, but the probability of being falsely refused has substantially increased.

A second possibility for increasing the number of biometric authentications is to combine the biometric operations in parallel as illustrated in figure 3. In such a configuration the user has two attempts which are performed independently from each other. The acceptance of a user by one of the engines will not reroute the authentication procedure to the other. If a person is not accepted by one of the engines he could still be accepted by the other. Combining both systems will provide an overall performance with :

$$FAR_S = FAR_A + FAR_B - FAR_A \times FARB_B$$

$$FRR_S = FRR_A \times FRR_B$$

Going back to the example with $FAR_A = FRR_A = 5 \%$ and $FAR_B = FRR_B = 2 \%$ the following results are obtained :

$$FAR_S = 0.05 + 0.02 - 0.05 \times 0.02 =$$

$$0.7 - 0.001 = 0.069 \text{ or } 6.9 \%$$

$$FRR_S = 0.05 \times 0.02 = 0.001 \text{ or } 0.1 \%$$

Thus a parallel combinatorial system has a better $FRR_S$ than each of the individual system, but the $FAR_S$ has substantially increased.

A third possibility for increasing the number of biometric authentications is to form a combination of both parallel and serial combinations such as for example illustrated in figure 4. Each of the bio-engines performs in parallel several authentication processes and the output of the first layer of bio-engines (1) (for example the voice authentication) is serially combined to the second layer of bio-engines (2) (for example a fingerprint authentication). With such a set-up a user has three attempts with the first layer and if he is successful in one of those attempts he has again three attempts with the second layer. The overall performance of this system is now :

$$FAR_{S1} = FAR_{1a} + (1-FAR_{1a}) \times FAR_{1b}$$

$$+ (1 - FAR_{1a}) \times (1 - FAR_{1b}) \times FAR_{1C}$$

$$FRR_{S1} = FRR_{1a} \times FRR_{1b} \times FRR_{1c}$$

$$FAR_{S2} = FAR_{2a} + (1 - FAR_{2a}) \times FAR_{2b}$$

$$+ (1 - FAR_{2a}) \times (1 - FAR_{2b}) \times FAR_{2c}$$

$$FRR_{S2} = FRR_{2a} \times FRR_{2b} \times FRR_{2c}$$

$$FAR_{SS} = FAR_{S1} \times FAR_{S2}$$

$$FAR_{SS} = FRR_{S1} + (1 - FRR_{S1}) \times FRR_{S2}$$

Turning back to the example with $FAR_{1a,1b,1c} = FRR_{1a,1b,1c} = 5\%$

$$FAR_{2a, 2b, 2c} = FRR_{2a,2b, 2c} = 2 \%$$

the following results are obtained.

$$FAR_{SS} = 0.083 \text{ or } 0.83 \%$$

$$FRR_{SS} = 0.0013 \text{ or } 0.013 \%$$

This set-up thus provide an overall improvement since both the FAR and FRR have better values than the individual systems.

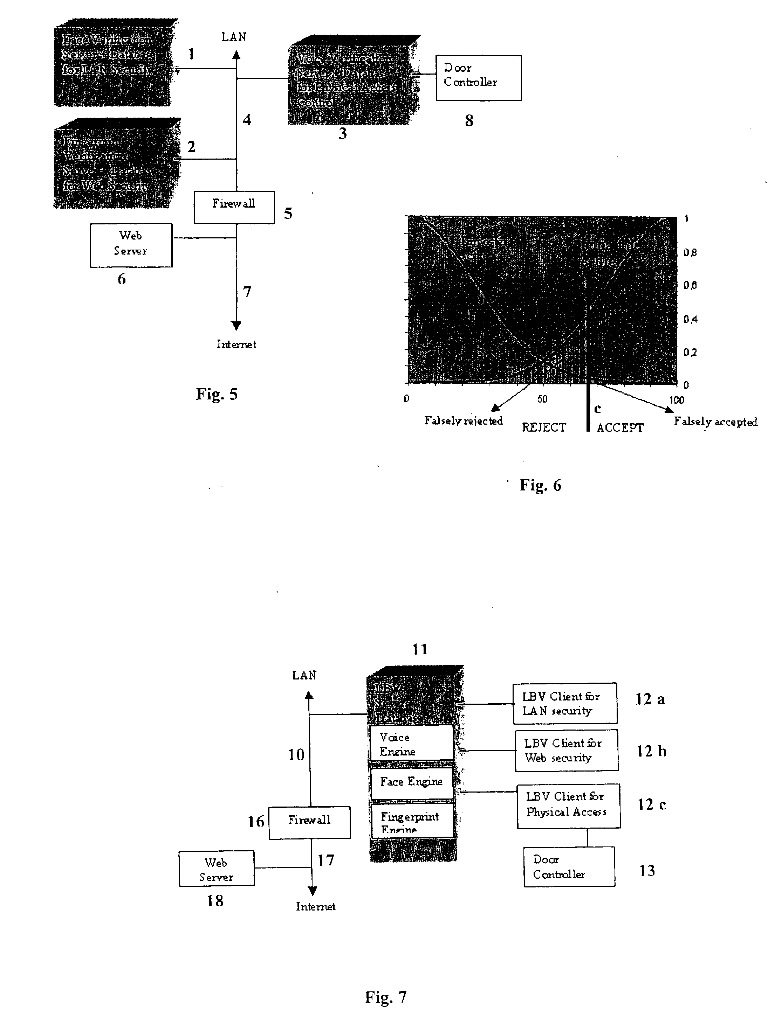

The theory set out here before shows thus by using several layers into an authentication scheme in a same session enables the combination of several biometric results. Figure 5 shows schematically an embodiment according to the state of the art of combining several bio-engines. The illustrated device comprises face authentication member 1, a fingerprint authentication member 2 and a voice authentication member 3 which are all connected to a Local Area Network 4 (LAN). Of course other members could be connected to the LAN but only three are shown for the sake of clarity. A firewall 5 protects the LAN from the outside publically accessible network 7 to which a netserver 6 is connected. The entity 8 to which access has to be managed is for example formed by an entrance door. Each of the members 1, 2 and 3 operate individually from each other and have there own server and their own database in which biometric templates are stored. Biometric templates being each time formed by a set of data comprising the biometric data belonging to one or more clients of which the access to the entity has to be controlled and who have access to the entity. So for example the biometric template of the face of Arthur Jones who has access to the building is formed by a set of data identifying the face of Arthur Jones.

In the device of figure 5 each of the members will perform there own authentication process by using their own database and own bio-engines and each bio-engine will issue a score which will be compared with the threshold set in that bio-engine upon initializing that bio-engine. If the score of the bio-engine is higher than the threshold an acceptance signal will be issued and supplied to the LAN, if not a refusal signal is issued and supplied to the LAN. The score such as issued by the bio-engine is not available on the LAN.

As already mentioned each bio-engine provides a score which is thresholded to come to a decision being accept, reject or fuzzy. Each bio-engine has a performance curve that characterizes the technology involved and which is expressed by the EER.

Figure 6 shows a first curve (a) for the bonafide score and a second curve (b) for the impostor score. The vertical line ( c ) illustrates the set threshold value. If the score is higher than the threshold the user is accepted, if not he is rejected. In biometrics there is a typical trade-off between accepting users and rejecting them. Increasing the threshold will lower the false accept but will raise the false reject rate. Since biometrics, by their nature, are not deterministic the score obtained by the bio-engines may show variance over time. Typically a user either a bonafide or an impostor, will usually have a Gaussian distribution around his mean score.

Combining different biometrics, each with their specific FAR, FRR and EER enables to get a better performance. The biometric authentication device according to the present invention combines the outcome of different bio-engines at their result or score level and not at the level of the signals as it is the case for the device shown in figure 5. An example of a biometric authentication device according to the present invention is schematically illustrated in figure 7. The device comprises a LAN 10 to which a layered biometric platform 11 is connected. A firewall 16 is connected between the LAN 10 and the outside network 17 to which a web server 19 could also be connected. Different client modules 12 (a, b, c) can be connected to the platform 11. So for example module 12a is dedicated to particular client features for the LAN security, whereas module 12b respectively 12c is dedicated to particular client features for the web security and physical access to an entity such as a door 13. The different bio-engines performing the biometric authentication operation are now embedded in the platform. The centralization of all bio-engines 11a, 11b and 11c into one platform enables to centralize the storage of the bio-data and templates and to have a common logging and archiving environment. The platform has a common server operating with a common database which is either permanently embedded in the platform and for example formed by a hard disc or another memory, or is formed by a stand alone memory such as for example a smartcard which is connectable to the platform. The server is formed either by a relatively powerful computer, as biometric needs an intensive cpu work, or is formed by different processors provided to operate together.

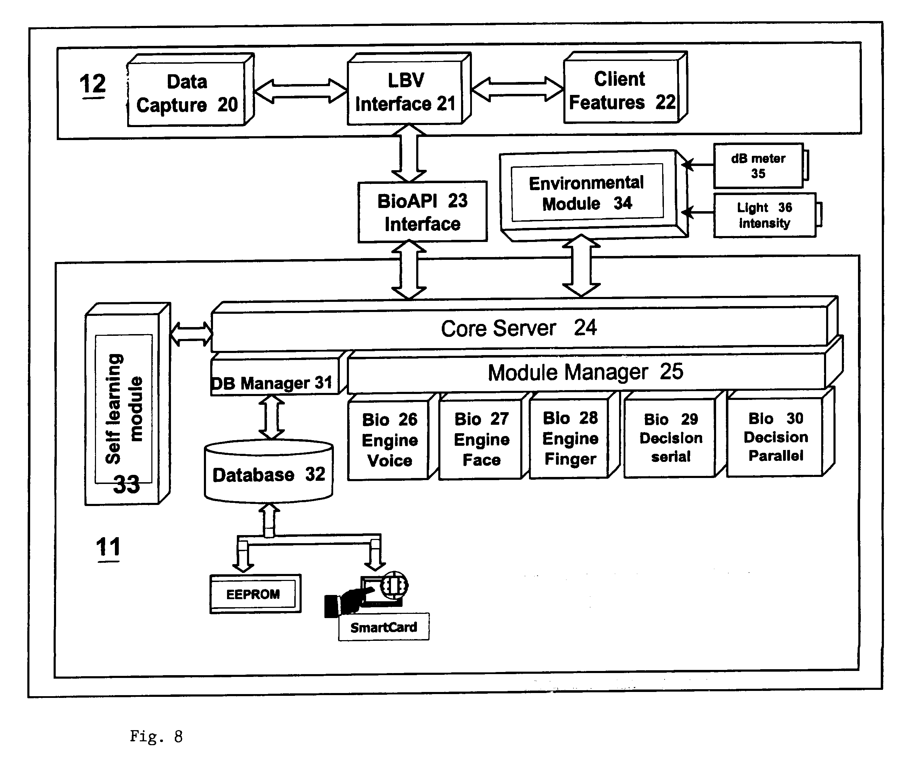

Figure 8 illustrates an embodiment of the architecture of the platform and the client module of the biometric authentication device according to the present invention. The client module 12 comprises one or more data capture units 20, depending on the biometric authentication to be performed. So for example if authentication is to be performed on the face, the fingerprint and the voice, the data capture unit will comprise a camera, a fingerprint scanner and a microphone. The data capture unit is connected with an interface 21 provided to process the data captured by the unit 20 into a predetermined format arranged to be processed by the bio-engines. A client feature unit 22 is further connected to the interface 22 and is provided for input of client dedicated features. Such features indicate for example particularities for certain users (poor quality of the voice, etc.) Which can then be taken into account by the device. The data provided by the client feature unit 22 is also formatted by the interface 21.

The interface 21 is connected to a bio-application program interface 23 which is part of the platform 11. This platform comprises a decision unit formed by a core server 24 and a module manager 25. The decision unit is connected to interface 23. Different bio-engines 26, 27 and 28 are connected to the decision unit and are operating according to a master-slave relationship, the decision unit being the master and the bio-engines the slaves. The module manager 25 is provided for managing the data traffic between the core server and the bio-engines. Bio-engine 26 executes a voice authentication operation and bio-engines 27 and 28 respectively execute a face and a fingerprint authentication. Of course more than three bio-engines could be available and even with two bio-engines the invention could be applicable. It should also be noted that the decision unit can operate on different operating systems, being Windows, Unix etc.

The decision unit is also connected with a first bio-decision engine 29 provided for executing a serial combinatorial operation with the scores of at least one bio-engine. Bio-decision engine 29 for example can apply an AND operation on the scores of bio-engine 26 or on the scores of bio-engines 26 and 27. The decision unit is further connected with a second bio-decision engine 30 provided for executing a parallel combinatorial operation, i.e. applying an OR operation, with the scores of at least one bio-engine. The first and second bio-decision engines are also slaves for the decision unit. It should be noted that the presence of both the first and the second bio-decision engines is not absolutely required. The device according to the present invention could also operate with only one of those bio-decision engines or even with none of the bio-decision engines.

A data base manager 31 is also connected to the decision unit. This data base manager controls the data traffic between the decision unit and a database 32 wherein the biometric templates of the clients are stored. A self learning module 33 is further connected to the decision unit and is provided for updating the templates stored in the data base as a result of one or more good scores issued by the bio-engine. Finally an environmental module 34 to which sensors 35 and 36 are connected, is connected to the decision unit. The latter module is provided for supplying environmental information to the decision unit such as for example background noise which could adversely affect the signal picked up by the microphone, or heavy light intensity which could adversely affect the image recorded by the camera. The sensors 35 and 36 are then formed by a dB meter and a light intensity meter and supply their measurement values to the environmental module 34. The latter then interprets these values and forwards information to the decision unit which thereupon can modify its decision criteria as will be described hereinafter.

Before the biometric authentication device according to the present invention is fully operative an initialisation process is required. The initialisation process comprises the loading of the client features by means of the client features unit 22. Once loaded they are formatted by the interface 22 and forwarded to the decision unit (24, 25). The biometric templates of the users also have to be created and stored into the database. For this purpose each of the users to who access will be provided to the entity protected by the device, will have to present themselves to the data capture unit so that the necessary data can be collected to form the templates. Once the data capture unit has collected the data from the user, this data is formatted into a biometric template according to a predetermined format by the interface 21 and forwarded via the decision unit and the database manager 31 to the database where the template is stored. If the database stores the templates of several users, a PIN (Personal Identification Number) is assigned to each user and the value of the PIN is stored in the database together with the templates to which the PIN belongs. If a smartcard is used as database the use or manual entry of a PIN is not necessarily required as the user carries this smartcard with him and only needs to insert his smartcard into the device to furnish his template and his supposed identity stored on the smartcard to the device. In order to enable a suitable operation of the device, it is of course necessary that the templates are formatted in a same way as will be the data collected by the data capture unit for an authentication operation.

The initialisation further comprises the initialisation of the decision unit which is loaded with weight factors to be assigned to the scores issued by the bio-engines as well as the relationship between those weight factors. The threshold value of the device also has to be set, as this will be dependent of the level of security desired.

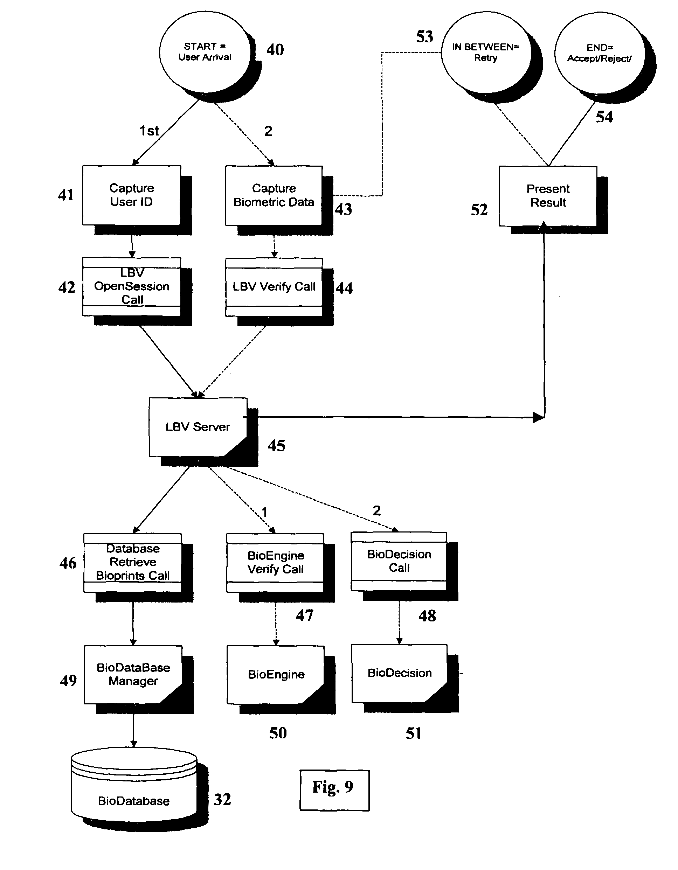

The operation of the biometric authentication device according to the invention will now be described with reference to a flowchart shown in figure 9. Suppose a bonafide user wants to get access to an entity protected by the biometric authentication device. The user presents (40) himself in front of the device and types (49) his PIN and/or introduces (41) his smartcard comprising his templates. The client module 12 will open (42, 45) an authentication session by activating the data capture unit 20 and reading the introduced PIN and/or the templates available on the smartcard. When a PIN is received the template associated to that PIN is read (46) in the database and supplied to the database manager 32. If the PIN is incorrect, which could be the case with an impostor or due to an error during typing, an error message is generated which can start a retry operation. After a predetermined number of retries, for example threes the device sends a refusal message and access is refused.

The data capture unit will capture (43) life biometric data from the user, for example by letting him say a predetermined word, for example his name, recording a picture form his face and fingerprint. The captured data is formatted (44) by the interface 21 in order to form a life biometric database which is the supplied (45) to the decision unit.

The core server of the decision unit is provided to form a decision based on a decision strategy. This strategy comprises the processing of the scores such as issued by the bio-engines 26, 27 and 28. Suppose for example that the Verified Score to be generated by the decision unit is formed by : $Vs = \alpha\, S_v + \beta S_f + \gamma S_p$ wherein

> $S_v$ : score generated by the bio-engine 26 performing the voice authentication
> $S_f$ : score generated by the bio-engine 27 performing the face authentication
> $S_p$ : score generated by the bio-engine 28 performing the fingerprint authentication
> and $\alpha$, $\beta$ and $\gamma$ being weight factors comprised between 0 and 1 and $\alpha + \beta + \gamma = 1$

The scores of the bio-engines being normalized $- 1 \le S \le +1$
The decision unit will then issue either an acceptance if $Vs > Th$ or a refusal if $Vs \le Th$, where Th is the threshold value. The values given here are only given by way of example and it will be clear that other values can be used as well as other mathematical relationships for Vs and for the weight factors.

The life biometric data supplied to the decision unit is forwarded (47) by using the module manager 25 to the respective bio-engines. The module manager also forwards the biometric templates retrieved from the data base to the respective bio-engines. So the voice template and voice life biometric data is forwarded to the bio-engines 26 and respectively the face and the fingerprint data to the bio-engines 27 and 28 respectively. The bio-engines then perform (50) their authentication operation on the received data and generate each a respective score $S_v$, $S_f$, $S_p$.

Depending on the configuration of the device, the module manager sends the scores to the core server if only one authentication procedure is necessary, or to the bio-decision engines 29 or 30 if serial or parallel combinatorial operations are requested (48). In the latter case the bio-engines will again perform one or more authentication operations in function of how much attempts are involved in the serial an/or parallel combinatorial operation. In case of combinatorial operations the module manager preferably supplies new life biometric data captured by the data capture unit. The bio-decision engines then perform (51) their combinatorial operation on the scores of the bio-engines and determine a value for $S_v$, $S_f$ and $S_p$ which is supplied via the module manager to the core server.

Once the core server has received the score values, the verified scores Vs is determined and compared with the threshold value Th. If $Vs > Th$ the core server issues (52) an acceptance signal and enables (54) access. If $Vs \le Th$ the core server either issues a refusal or starts a retry (53) depending on how the latter is configured.

If the core server is configured for starting a retry operation it will generate a control signal in order to start such a retry operation. Under control of such a control signal the weight factors $\alpha$, $\beta$ or $\gamma$ can then be adjusted and further weight factors factors $\alpha'$, $\beta'$ and $\gamma'$ are generated. This adjustment is for example done by taking into account the score values and/or the client feature. If for example the client feature indicates that the concerned user has a poor voice quality, the weight factor a is reduced for example by 25 % and the others are increased in order to satisfy the criteria $\alpha + \beta + \gamma = 1$. On the other if the score of the face is for example excellent, i.e. substantially higher than the threshold $Th_f$ for the face, and the one of the voice is normal whereas the one of the fingerprint is bad, for example because the finger is injured or burned, the core server can decide to lower $\gamma$ and increase $\beta$. The core server then determines again Vs by using the further weight factors and not necessarily by starting a new authentication process. If $Vs > Th$ an acceptance signal is generated. if not again a retry (53) can be generated or the process is stopped.

The original aspect of the present device is thus to move the decision to verify and/or identify a user out of the several single bio-engines and to let them operate as slaves of a decision unit where the final decision is taken based on weighted individual scores. The bio-engine as such can no longer alone decide to accept or reject, because their score value is no longer individually checked against a threshold value. Only the verified score, such as obtained and processed by the decision unit, can decide on accept or reject.

If the device comprise a self learning module 33, the latter is informed by the core server 24 if a bio-engine issues a very high score. This signifies that probably the life biometric data is of exceptional quality. To that purpose the core server for example generates a second control signal when the score of the considered bio-engine is higher than a further threshold value which is for example 20 % higher than the threshold of that bio-engine. The self learning module will then ask the module manager to furnish this life biometric data and will substitute the template stored in the database by this life biometric data which will now form the biometric template.

If the device comprises an environmental module 34, the information generated by that module is furnished to the core server under control of a trigger signal generated by that module. The core server is then provided to modify the weight factors $\alpha$, $\beta$ and $\gamma$ in function of the received information and under control of the trigger signal. For example if a heavy background noise is detected, the dB meter will indicate a high value and the core server can decrease the value of $\alpha$ depending on the measured dB value.

## Claims

1. A biometric authentication device provided for managing access to at least one entity, said device being operatively connectable to a database provided for storing biometric templates, said device comprising a set of bio-engines each having an input for receiving said biometric templates and life biometric data originating from a data capture unit provided to collect life biometric data, each of said bio-engines being provided for performing a dedicated biometric authentication operation with said biometric templates and said life biometric data and for generating a score as a result of said authentication operation, characterized in that said device comprises a decision unit connected to said bio-engines and operating according to a master-slave relationship, wherein said decision unit being the master, said decision unit being provided for receiving each of said scores and for assigning a respective weight factor to each of said scores and forming a set of weighted scores therewith, said decision unit being further provided for combining said weighted scores and generating a verified score therewith, said decision unit being also provided for comparing said verified score with a threshold value and for generating an access enable signal as a result of a positive comparison and an access refusal signal as a result of a negative comparison.

2. A biometric authentication device as claimed in claim 1, characterized in that the decision unit is connected with a first bio-decision engine, which is provided for executing a serial combinatorial operation with the scores generated by at least one of said bio-engines, said first bio-decision engine being provided to operate as a slave from said decision unit.

3. A biometric authentication device as claimed in claim 1 or 2, characterized in that the decision unit is connected with a second bio-decision engine, which is provided for executing a parallel combinatorial operation with the scores generated by at least one of said bio-engines, said second bio-decision engine being provided to operate as a slave from said decision unit.

4. A biometric authentication device as claimed in anyone of the claims 1 to 3, characterized in that said decision unit is provided for generating a control signal when said verified score is below said threshold, said decision unit being further provided for determining a set of further weight factors under control of said control signal and assigning them to said scores and generating a further verified score therewith.

5. A biometric authentication device as claimed in claim 4, characterized in that said further weight factors and said weight factors each time satisfy a predetermined relationship.

6. A biometric authentication device as claimed in anyone of the claims 1 to 5, characterized in that said decision unit comprises a core server which is provided for generating said verified score and executing said comparison.

7. A biometric authentication device as claimed in claim 6, characterized in that said decision unit comprises a module manager which is provided for managing data traffic between said bio-engines and said core server.

8. A biometric authentication device as claimed in claim 2 and 6 or 3 and 6, characterized in that said decision unit comprises a module manager, which is provided for managing data traffic between said bio-decision engine and said core server.

9. A biometric authentication device as claimed in anyone of the claims 1 to 8, characterized in that said data capture unit is connected to an interface to which a feature module is connected, said feature module being provided for input of client dedicated features.

10. A biometric authentication device as claimed in anyone of the claims 1 to 9, characterized in that said biometric templates are stored on a memory formed by either a smartcard, a harddisk, a EEPROM or a flash memory.

11. A biometric authentication device as claimed in anyone of the claims 1 to 10, characterized in that said device comprises an interface having an input for receiving said life biometric data from said data capture unit, said interface being provided to format said life biometric data according to a predetermined format.

12. A biometric authentication device as claimed in anyone of the claims 1 to 11, characterized is that said decision unit is connected to a self learning module which is provided for substituting into said database a biometric template by a life biometric data under control of a second control signal generated by said decision unit upon detection of a score issued by a bio-engine which is higher than a further predetermined threshold value.

13. A biometric authentication device as claimed in anyone of the claims 1 to 12, characterized in that said decision unit is connected to an environmental module which is provided for generating a trigger signal, said decision unit being provided to modify the weight factors under control of said trigger signal.

**Fig. 1**

**Fig. 2**

**Fig. 3**

**Fig. 4**

Face Verification
Server Database
for LAN Security
1

LAN

Voice Verification
Server Database
for Physical Access
Control
3

Door
Controller
8

Fingerprint
Verification
Server Database
for Web Security
2

4

Firewall 5

Web
Server
6

7

Internet

**Fig. 5**

Falsely rejected    REJECT    c    ACCEPT    Falsely accepted

**Fig. 6**

11

LAN

LBV
Server
Database

Voice
Engine

Face Engine

Fingerprint
Engine

LBV Client for
LAN security    12 a

LBV Client for
Web security    12 b

LBV Client for
Physical Access    12 c

10

16    Firewall

17

Web
Server
18

Internet

Door
Controller    13

**Fig. 7**

Fig. 8

START =
User Arrival  **40**

IN BETWEEN=
Retry  **53**

END=
Accept/Reject/  **54**

1st    2

**41**  Capture
User ID

Capture
Biometric Data  **43**

Present
Result  **52**

**42**  LBV
OpenSession
Call

LBV Verify Call  **44**

LBV Server  **45**

1    2

**46**  Database
Retrieve
Bioprints Call

BioEngine
Verify Call

BioDecision
Call

**47**    **48**

**49**  BioDataBase
Manager

BioEngine

BioDecision

**50**    **51**

BioDatabase  **32**

**Fig. 9**

**EP 1 081 632 A1**

European Patent Office

**EUROPEAN SEARCH REPORT**

Application Number

EP 99 87 0178

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 95 26013 A (MINNESOTA MINING & MFG) 28 September 1995 (1995-09-28) * claim 1; figure 1 * --- | 1-13 | G06K9/68 |
| A | LUO R C ET AL: "A TUTORIAL ON MULTISENSOR INTEGRATION AND FUSION" PROCEEDINGS OF THE ANNUAL CONFERENCE OF THE INDUSTRIAL ELECTRONICS SOCIETY. (IECON),US,NEW YORK, IEEE, vol. CONF. 16, 1990, pages 707-722, XP000217315 ISBN: 0-87942-600-4 * the whole document * --- | 1-13 | |
| A | GB 2 229 305 A (BRITISH TELECOMM) 19 September 1990 (1990-09-19) * abstract; figure 1 * --- | 1-13 | |
| A | FR 2 634 570 A (ANDRE CATHERINE ;REITTER RENAUD (FR); REVILLET MARIE JOSEPHE (FR)) 26 January 1990 (1990-01-26) * the whole document * ----- | 1-13 | **TECHNICAL FIELDS SEARCHED** (Int.Cl.7) G06K |

The present search report has been drawn up for all claims

| Place of search | Date of completion of the search | Examiner |
|---|---|---|
| THE HAGUE | 4 February 2000 | Granger, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 87 0178

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2000

| Patent document cited in search report | | Publication date | Patent family member(s) | | Publication date |
|---|---|---|---|---|---|
| WO 9526013 | A | 28-09-1995 | AU 2186095 A | | 09-10-1995 |
| | | | BR 9507142 A | | 30-09-1997 |
| | | | CA 2183886 A | | 28-09-1995 |
| | | | DE 69501327 D | | 05-02-1998 |
| | | | DE 69501327 T | | 23-07-1998 |
| | | | EP 0752143 A | | 08-01-1997 |
| | | | ES 2110841 T | | 16-02-1998 |
| | | | JP 9510636 T | | 28-10-1997 |
| | | | US 5719950 A | | 17-02-1998 |
| GB 2229305 | A | 19-09-1990 | HK 127496 A | | 26-07-1996 |
| FR 2634570 | A | 26-01-1990 | NONE | | |

EPO FORM P0459

For more details about this annex : see Official Journal of the European Patent Office, No. 12/82